# EUROPÄISCHE PATENTSCHRIFT

(11) **EP 2 414 572 B1**
(45) Veröffentlichungstag und Bekanntmachung des Hinweises auf die Patenterteilung: **29.04.2015**
(21) Anmeldenummer: 10703813.5
(22) Anmeldetag: 08.02.2010
(51) Int. Cl.: D03D 3/08, D03D 11/02, B60C 27/18

(54) **TEXTILES FLÄCHENGEBILDE UND VERFAHREN ZUR HERSTELLUNG DESSELBEN**
TEXTILE WEB MATERIAL AND METHOD FOR PRODUCING THE SAME
STRUCTURE PLANE TEXTILE ET PROCÉDÉ POUR SA FABRICATION

(30) Priorität: 02.04.2009 DE 102009016041
(43) Veröffentlichungstag der Anmeldung: 08.02.2012
(73) Patentinhaber: Global Safety Textiles GmbH, 79689 Maulburg (DE)
(72) Erfinder: RUSCHULTE, Jörg, 79736 Rickenbach (DE)
(74) Vertreter: Fischer, Matthias
(86) Internationale Anmeldenummer: PCT/EP2010/000770
(87) Internationale Veröffentlichungsnummer: WO 2010/112102

(56) Entgegenhaltungen:
- EP-A1- 1 745 948
- DE-A1-102007 036 855
- FR-A- 347 992

## Beschreibung

Die vorliegende Erfindung betrifft ein gewebtes textiles Flächengebilde, mit einer oberen Gewebelage und einer unteren Gewebelage, welches als Schussfäden Trägerfilamente mit die Trägerfilamente umgebenden Umwindefilamenten aufweist und ein Verfahren zur Herstellung desselben.

Aus der DE 10 2007 036 855 A1 (RUD) ist eine Gleitschutzvorrichtung für Kraftfahrzeugräder in Form einer textilen Schneekette bekannt, die einen Laufgürtel aufweist. Der Laufgürtel weist über die gesamte Breite auf der von der Lauffläche des Rades wegweisenden sog. Eisseite bzw. Außenseite der Schneekette eine Vielzahl von steifen vorzugsweise mit Stahldraht (Umwindefilament) umwundenen Monofilamenten als Trägerfilamente auf, welche sich beim Fahren in die Eisoberfläche eingraben und dem Fahrzeug einen guten Griff auf der glatten Unterlage verschaffen. Nachteilig bei dieser Schneekette stellt sich ihre geringe Standzeit auf nur teilweise mit Eis oder Schnee bedeckter oder gar trockener Fahrbahn heraus. Nach bereits wenigen Kilometern Fahrleistung auf trockener Strecke können sich die Trägerfilamente über die gesamte Breite infolge der Zerstörung von Kettfadenabschnitten aus der Lauffläche lösen. Hierbei stanzen die vorzugsweise aus Stahl bestehenden Umwindefilamente Teile der sie haltenden Kettfäden regelrecht durch. Die Trägerfilamente hängen dann girlandenartig lose quer über der textilen Oberfläche. Sie lösen sich, beginnend an irgendeiner Stelle der Lauffläche, ganz aus der textilen Oberfläche und stellen die sichere Funktion der Schneekette in Frage.

Der vorliegenden Erfindung liegt die Aufgabe zugrunde, ein textiles Flächengebilde vorzuschlagen, bei dem die aus dem Stand der Technik bekannten Nachteile vermieden oder zumindest stark verringert werden, sowie ein Verfahren zur Herstellung desselben.

Die Aufgabe wird zunächst gelöst mit einem textilen Flächengebilde gemäß Anspruch 1. Ein derart ausgebildetes gewebtes textiles Flächengebilde, mit einer oberen Gewebelage und einer unteren Gewebelage, welches Kettfäden und erste und zweite Schussfäden aufweist, und als zweite Schussfäden Trägerfilamente und diese umgebende Umwindefilamente aufweist, ist dadurch gekennzeichnet, dass die Trägerfilamente derart in das textile Flächengebilde eingebunden sind, dass sie in zur Kettfadenrichtung im Wesentlichen parallelen ersten Breitenbereichen an die Oberfläche der oberen Gewebelage treten und in zur Kettfadenrichtung im Wesentlichen parallelen zweiten Breitenbereichen nicht an die Oberfläche der oberen Gewebelage treten.

Mit dieser erfindungsgemäßen Ausbildung eines textilen Flächengebildes lässt sich vorteilhafterweise die Standzeit einer Schneekette gegenüber der Schneekette nach dem Stand der Technik vervielfachen. Das Herauslösen von Trägerfilamenten erfolgt wesentlich später und dann auch nur noch im Gebiet der ersten Breitenbereiche. Die demnach auch geringere Belastung der Trägerfilamente in Längsrichtung trägt zur Schonung der die Trägerfilamente einbindenden Kettfäden und zur Erhöhung der Standzeit bei.

In einer vorteilhaften Ausbildung der Erfindung ist das textile Flächengebilde dadurch gekennzeichnet, dass es eine rechte und einen linke Karkasse und eine dazwischen liegende Lauffläche aufweist, wobei die Karkassen dritte Breitenbereiche, in denen die Trägerfilamente derart in das textile Flächengebilde eingebunden sind, dass sie nicht an die Oberfläche der oberen Gewebelage treten, und wobei die Lauffläche erste und zweite Breitenbereiche aufweist.

Das besonders Vorteilhafte an dieser Ausbildung besteht darin, dass das textile Flächengebilde bereits nahezu die gesamte Schneekette darstellt. Die in den Randbereichen angeordneten Karkassen können sofort als die Karkasse des Reifens abdeckende Fixiermittel der Schneekette dienen. Die hierbei im Bereich der Bordüren ebenfalls "versteckten" Trägerfilamente werden dort festgehalten und sind damit bereits "versäubert".

In einer weiteren vorteilhaften Ausbildung der Erfindung ist das textile Flächengebilde dadurch gekennzeichnet, dass die Lauffläche in Schussfadenrichtung in besonders ausgewählter Verteilung quer über die Breite der Lauffläche erste Breitenbereiche auch unterschiedlicher Breite aufweist. Damit lässt sich vorteilhafterweise die Auswahl und Platzierung der ersten Breitenbereiche auf Wunsch einer Profilstruktur- und -form eines Reifens anpassen und der Verschleiß sowohl des Reifens als auch der Schneekette verringern. Bei dieser erfindungsgemäßen Anordnung der Trägerfilamente derart, dass diese nach innen, d. h. zum Reifenprofil zeigend in die Profilrillen ragen, werden aufgrund dieser Geometrie die die Trägerfilamente einbindenden Kettfäden, da sie nicht auf den Untergrund gedrückt werden besonders geschont, was zur Erhöhung der Standzeit entscheidend beiträgt.

In einer weiteren vorteilhaften Ausbildung der Erfindung ist das textile Flächengebilde dadurch gekennzeichnet, dass es in vorbestimmter Länge abgepasst gewebt ist, und dass die Lauffläche zur Schussfadenrichtung im Wesentlichen parallele Längenbereiche aufweist, in denen keine zweiten Schussfäden eingebunden sind. Hierdurch lässt sich bereits auf der Webmaschine die bereits längenmäßig festgelegte Schneekette herstellen. Die längenmäßig abgepasst gewebten textilen Flächengewebestücke werden auch Panels genannt. Üblicherweise werden an den Enden Aufsatzflecken mit Klettverschlusspaarungen angebracht, z. B. aufgenäht. Ist nun die Stoßkante eines Aufsatzfleckens bei einer um einen Reifen herum gelegten Schneekette in einem Längenbereich des textilen Flächengebildes angeordnet, in dem keine zweiten Schussfäden eingebunden sind, dann lässt sich die Stoßkante gleichsam "versenken".

In einer weiteren vorteilhaften Ausbildung der Erfindung ist das textile Flächengebilde dadurch gekennzeichnet, dass die zweiten Schussfäden Umwindefilamente in S- oder Z-Wicklung aufweisen. Hiermit kann vorteilhafterweise erreicht werden, dass nach Wahl Umwindefilamente in S- oder Z-Wicklung eingesetzt werden, welche die Spurführung des textilen Flächengebildes oder einer hiermit erfindungsgemäß ausgestatteten Schneekette gezielt beeinflussen.

In einer weiteren vorteilhaften Ausbildung der Erfindung ist das textile Flächengebilde dadurch gekennzeichnet, dass sich immer ein zweiter Schussfäden mit Umwindefilament in S-Wicklung mit einem zweiten Schussfäden mit Umwindefilament in Z-Wicklung abwechselt. Es hat sich überraschenderweise gezeigt, dass eine regelmäßige Abwechslung von je einem zweiten Schussfäden mit Umwindefilament in S-Wicklung mit einem zweiten Schussfäden mit Umwindefilament in Z-Wicklung vorteilhafterweise zu einer besonders stabilen Spurtreue eines mit einer erfindungsgemäßen Schneekette ausgestatteten Rades führt und darüber hinaus den stabilen Sitz der Schneekette auf dem Rad fördert.

Die Aufgabe wird weiterhin gelöst mit Verfahren gemäß Anspruch 9, nämlich einem Verfahren zur Herstellung eines textilen Flächengebildes, mit einer oberen Gewebelage und einer unteren Gewebelage, welches Kettfäden und erste und zweite Schussfäden aufweist, und als zweite Schussfäden Trägerfilamente und diese umgebende Umwindefilamente aufweist, welches dadurch gekennzeichnet ist, dass die Trägerfilamente derart in das textile Flächengebilde eingebunden werden, dass sie in zur Kettfadenrichtung im Wesentlichen parallelen ersten Breitenbereichen (I) an die Oberfläche der oberen Gewebelage treten und in zur Kettfadenrichtung im Wesentlichen parallelen zweiten Breitenbereichen nicht an die Oberfläche der oberen Gewebelage treten.

Die erfindungsgemäße Verfahrensweise ermöglicht vorteilhafterweise eine kostengünstige Herstellung eines textilen Flächengebildes, wobei ohne besonderen Zusatzaufwand ein sehr verschleißfestes Gewebe zum Einsatz in textilen Schneeketten erzeugt werden kann.

Eine vorteilhafte Ausbildung des erfindungsgemäßen Verfahrens zur Herstellung eines textilen Flächengebildes nach Anspruch 2, 3, 4, 5, 6 oder 7, ist dadurch gekennzeichnet, dass das textile Flächengebilde in mehrfach nebeneinander liegender Anordnung in einer Gewebebahn gewebt wird. Der Vorteil liegt auf der Hand. Das textile Flächengebilde kann auf einer Breitwebmaschine in einem Arbeitsgang gleich mehrfach hergestellt werden.

In einer vorteilhaften Weiterbildung des erfindungsgemäßen Verfahrens werden die in mehrfach nebeneinander liegender Anordnung in einer Gewebebahn gewebten textilen Flächengebilde in Kettfadenrichtung mittels thermisch-mechanischer Trennverfahren oder mittels Ultraschall oder Laserschweißen getrennt. Beispielsweise werden die Polymeranteile der Trägerfilamente mittels Heißdraht und die Stahlanteile der Umwindefilamente mittels einer mechanischen Trenneinrichtung getrennt. Dadurch ergeben sich mit geringem Aufwand sauber voreinander getrennte textile Flächengebilde, deren Kanten vor der Weiterverarbeitung nicht mehr behandelt werden müssen.

Das Ablängen der einzelnen Panels erfolgt vorteilhafterweise mittels Laserschweißen in Schussfadenrichtug entsprechend der abgepasst gewebten Einzellängen.

In einer vorteilhaften Weiterbildung des erfindungsgemäßen Verfahrens wird das textile Flächengebilde in Schussrichtung mehrbahnig und in Kettrichtung in vorbestimmtem Längsrapport unter Einbezug der Längenbereiche, in denen keine zweiten Schussfäden (FF) eingebunden werden, abgepasst gewebt.

In einer vorteilhaften Weiterbildung des erfindungsgemäßen Verfahrens wird das abgepasst gewebte textile Flächengebilde in Schussrichtung mittels einer mechanischen, thermischen oder lasertechnischen Trennvorrichtung zu einzelnen Panels abgelängt.

Weitere Merkmale und Vorteile der Erfindung ergeben Sich aus den Unteransprüchen.

Zum besseren Verständnis der Erfindung und um zu zeigen, wie sie ausgeführt werden kann, wird sie im Folgenden anhand von Ausführungsbeispielen unter Zuhilfenahme einer Zeichnung kurz beschrieben.
- Fig. 1: zeigt ein erfindungsgemäßes textiles Flächengebilde schematisch in der Draufsicht.
- Fig. 1a: zeigt ein weiteres Beispiel eines erfindungsgemäßen textilen Flächengebildes schematisch in der Draufsicht.
- Fig. 2: zeigt das erfindungsgemäße textile Flächengebilde nach Fig. 1 schematisch im Querschnitt.
- Fig. 2a: zeigt das erfindungsgemäße textile Flächengebilde nach Fig. 1 a ähnlich wie in Fig. 2, jedoch unter expliziter Angabe von Kett- und Schussfäden schematisch im Querschnitt.
- Fig. 2c: zeigt das erfindungsgemäße textile Flächengebilde nach Fig. 1 ähnlich wie in Fig. 2a, in einer weiteren Variante schematisch im Querschnitt.
- Fig. 3: zeigt eine Weiterbildung des erfindungsgemäßen textilen Flächengebildes schematisch in der Draufsicht.
- Fig. 4: zeigt eine andere Weiterbildung eines erfindungsgemäßen textilen Flächengebildes schematisch im Querschnitt.
- Fig. 5: zeigt schematisch einen Abschnitt einer ganzen gewebten Gewebebahn GB.

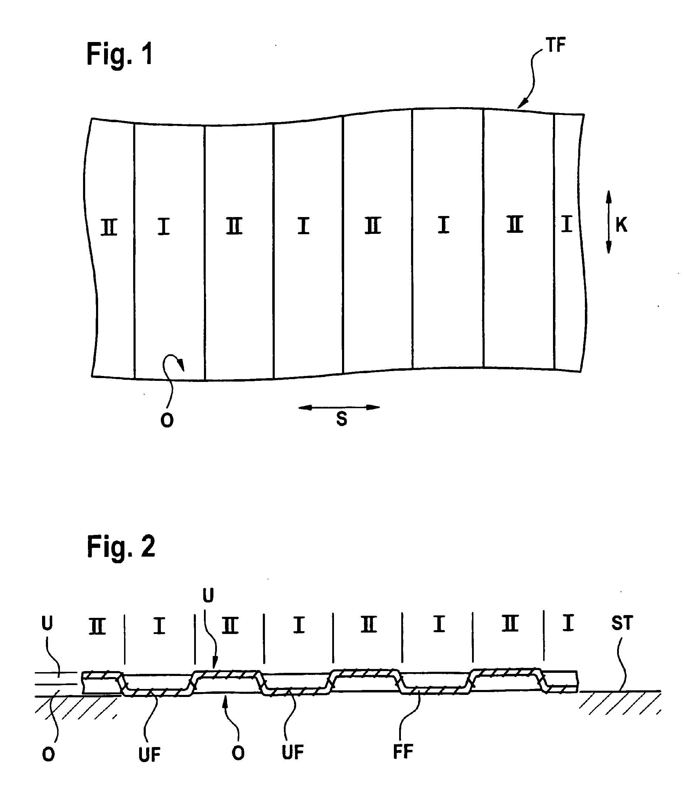

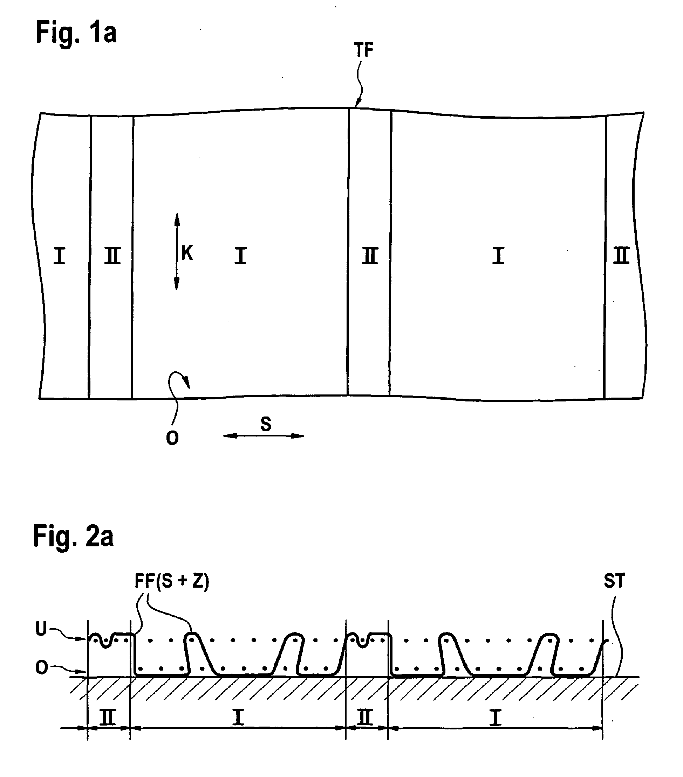

Fig. 1 zeigt einen beispielhaften Ausschnitt eines erfindungsgemäßen textilen Flächengebildes TF stark schematisiert in der Draufsicht, hier beispielsweise die obere Gewebelage O, mit sich abwechselnden Breitenbereichen I und II, wobei der Doppelpfeil S die Schussfadenrichtung und der Doppelpfeil K die Kettfadenrichtung angibt.

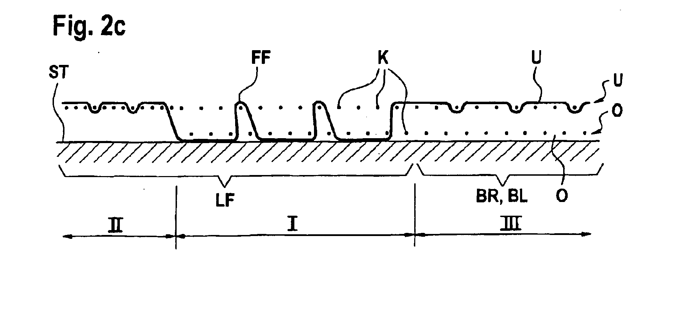

Fig. 2 zeigt das erfindungsgemäße textile Flächengebilde nach Fig. 1 schematisch im Querschnitt. Zur Blattunterkante zeigt die obere Gewebelage O und in die entgegen gesetzte Richtung zeigt die untere Gewebelage U. Trägerfilamente FF treten in den zur schematisch angedeuteten Straßenoberfläche ST zeigenden Breitenbereichen I an die Oberfläche O und in den Breitenbereichen II nicht an die Oberfläche O. Die Trägerfilamente FF umgebende Umwindefilamente UF greifen in die Straßenoberfläche ST ein. In den Breitenbereichen II sind die Trägerfilamente FF gleichsam in dem textilen Flächengebilde "versenkt" und keiner Berührung mit der Straßenoberfläche ausgesetzt, was zur Folge hat, dass sie in diesem Bereich auch keinem Verschleiß unterworfen werden.

Fig. 1a zeigt einen beispielhaften Ausschnitt eines weiteren Beispiels eines erfindungsgemäßen textilen Flächengebildes TF in der Draufsicht, wobei hier schmale Breitenbereiche II und dagegen wesentlich breitere Breitenbereiche I gewählt wurden.

In der Darstellung nach Fig. 2a, welche die Proportionen gemäß der Darstellung von Fig. 1 a übernommen hat, sind als dicke Punkte markierte Kettfäden gut zu erkennen, um die ein hier beispielhaft nur einmal dargestelltes Trägerfilament FF verläuft. Im Breitenbereich II verläuft das Trägerfilament FF in der unteren Gewebelage U, und im Breitenbereich I verläuft das Trägerfilament FF im Wesentlichen in der oberen Gewebelage O, wobei es über zwei oder drei Kettfäden der oberen Gewebelage flott liegt und nur jeweils über einen Kettfaden der unteren Gewebelage U eingebunden ist.

Bei einem textilen Flächengebilde aus dem Stand der Technik, zeigen sowohl in einem ersten Breitenbereich I mit einer ersten Bindungsart, welcher beim Einsatz als Schneekette eine Lauffläche LF darstellt, als auch in einem zweiten Breitenbereich II, mit einer gegenüber der ersten Bindungsart wesentlich engeren Bindung als auch in einem dritten Breitenbereich III die Trägerfilamente FF im Wesentlichen zur Gewebelage O und sind damit einem Kontakt mit einer Straßenoberfläche ST ausgesetzt. Dies trifft zwar für einen dritten Breitenbereich III, den Karkassenbereich BR, BL nicht im gleichen Maß zu, wie für die beiden anderen Bereiche I und II. Dennoch wird hier der Hauptnachteil der aus dem Stand der Technik bekannten Lösung gezeigt, nämlich die Verletzbarkeit bzw. die damit einhergehende geringe Verschleißfestigkeit dieser Konstruktion.

Fig. 2c zeigt das erfindungsgemäße textile Flächengebilde nach Fig. 1 ähnlich wie in Fig. 2a, in einer weiteren Variante - insbesondere zur Gegenüberstellung gegenüber dem Stand der Technik - schematisch im Querschnitt. Hieraus ist sofort der immense Vorteil der erfindungsgemäßen Konstruktion erkennbar. Im Breitenbereich II verläuft das Trägerfilament FF abgekehrt von der Gewebelage O und in der Gewebelage U zusätzlich noch auf der von der Straßenoberfläche ST wegzeigenden Seite und ist damit optimal vor Verschleiß geschützt. Die Lage der Trägerfilamente im Gewebe ist gegenüber dem Stand der Technik in verschleißgefährdeten Zonen praktisch invertiert. Auch ist im Breitenbereich II eine wesentlich stärkere Einbindung als im Breitenbereich I vorgesehen. Die Gewebedichte nach Prof. Walz liegt vorteilhafterweise im Bereich I bei etwa 100%, im Bereich II bei etwa 130% und im Bereich III bei etwa 110%, wobei das Trägerfilament FF im Bereich I in der unteren Gewebelage U zu etwa 66%, im Bereich II - hier gibt es nur eine untere Gewebelage - eben zu etwa 130% und im Bereich III zu etwa 78% eingebunden ist. Der Breitenbereich II mit einem in einer erfindungsgemäßen Schneekette vorteilhaften Gesamtflächenanteil von weniger als 10% bindet bei diesem vorteilhaften Ausführungsbeispiel die Trägerfilamente FF mit einer Gewebedichte nach Prof. Walz von mehr als 90%, sogar bis zu 130% ein.

Der im Ausführungsbeispiel nach Fig. 2c gezeigte doppellagige Breitenbereich III, welcher die Karkasse BR, BL einer erfindungsgemäßen Schneekette darstellt, bindet in seiner unteren Gewebelage U die Trägefilamente FF in einer höheren Gewebedichte ein, als der Gewebedichte der unteren Gewebelage U von Breitenbereich I entspricht. Gleichzeitig ist die Fadenfolge der Abbindung auf 2/1 gegenüber den übrigen Breitenbereichen I und II, welche eine Fadenfolge von 3/1 aufweisen, stark verkürzt. Beide Faktoren, die Gewebedichte sowie die Fadenfolge führen vorteilhafterweise zu einer besonders festen Verankerung der Trägerfilamente in der Karkasse, also dem Breitenbereich III. Die obere Gewebelage der Karkasse bzw. des Breitenbereichs III dient der die Verschleißfestigkeit fördernden Abdeckung und bindet keine Trägerfilamente FF ein.

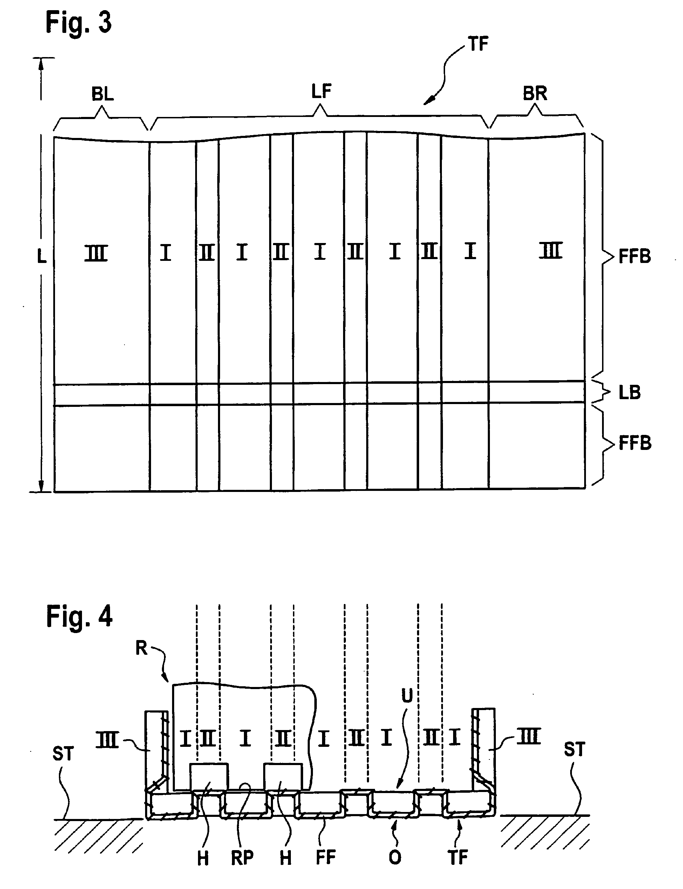

Fig. 3 zeigt einen Teil einer Weiterbildung des erfindungsgemäßen textilen Flächengebildes schematisch in der Draufsicht, welches in vorbestimmter Länge L abgepasst gewebt ist. Man kann gut die Karkassen BL und BR erkennen, die auch als dritte Breitenbereiche III, bezeichnet werden, in denen die Trägerfilamente FF derart in das textile Flächengebilde eingebunden sind, dass sie nicht an die Oberfläche der oberen Gewebelage O treten. Zwischen den Karkassen BR und BL liegt die Lauffläche LF des textilen Flächengebildes TF. In Längenbereichen FFB sind Trägerfilamente FF eingewebt, wogegen in einem beispielhaft gezeigten Längenbereich LB keine Trägerfilamente FF eingewebt sind. Diese Bereiche ohne Trägerfilamente FF wirken sich im Einsatz des textilen Flächengebildes als Schneekette dahingehend günstig aus, als hierdurch das Anhaften größerer Schneepakete und damit Zusetzen der textilen Schneekette erschwert wird.

Wie oben beschrieben und im Zusammenhang mit Fig. 4 gut erkennbar, sind in Breitenbereichen I aus der Gewebelage O ragende zur Straßenoberfläche hin mit Umwindefilamenten UF umwundene Trägerfilamente FF angeordnet, wogegen die Trägerfilamente FF in den Breitenbereichen II in der Tiefe des textilen Flächengebildes "versenkt" sind. Ein schematisch angedeuteter Abschnitt eines Reifens R hat ein Reifenprofil mit Profilstollen RP, welche an der unteren Gewebelage U anliegen. Zwischen den Profilstollen RP liegende Hohlräume H des Reifens sind übereinstimmend mit den Breitenbereichen II des textilen Flächengebildes TF angeordnet. Dies hat im Einsatz der textilen Schneekette den Vorteil, dass die mit Umwindefilamenten UF umwundenen Trägerfilamente FF nur in den Breitenbereichen I auf die Straßenoberfläche gedrückt werden. Die Breitenbereiche II der Schneekette unterliegen nur geringem Verschleiß, da sie nicht auf die Straßenoberfläche drücken.

Die Straßenoberfläche ST soll im Sinne dieser Beschreibung verschiedene Zustände wie eine trockene und eine vereiste oder schneebedeckte Fläche umfassen.

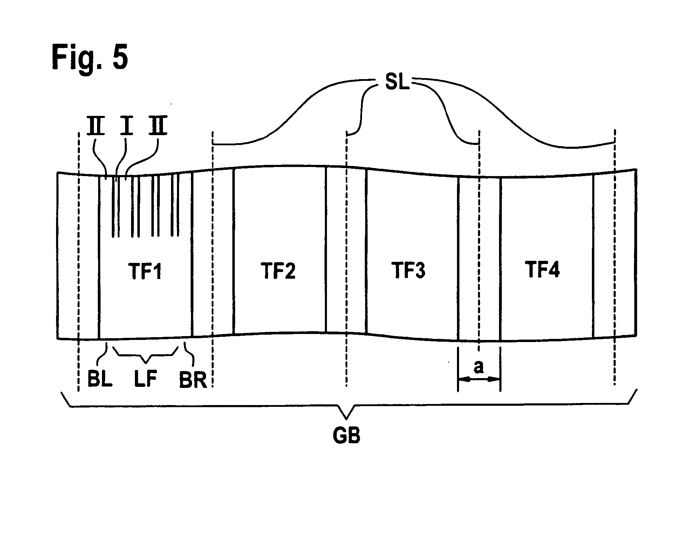

Fig. 5 zeigt schematisch einen Abschnitt einer ganzen auf einer (nicht gezeigten) Webmaschine gewebten Gewebebahn GB mit beispielhaft vier textilen Flächengebilden, sog. Panels TF1 bis TF4, welche analog zu dem textilen Flächengebilde TF gemäß den Fig. 1 bis 4 ausgebildet sind und Breitenbereiche I und II sowie Bordüren BL und BR ausweisen, welche erfindungsgemäß entlang von gestrichelten Schnittlinien SL aus der Gewebebahn GB ausgeschnitten werden können. Die Abstände a können beliebig breit oder schmal gewählt werden.

Die Breitenbereiche I, II und III haben in der Summe vorzugsweise eine Gewebedichte DG, berechnet nach Prof. Walz, von höher als 90%. Die Lauffläche LF wird aus den Breitenbereichen I mit der größten Traktion und den hierzu parallel verlaufenden Breitenbereichen II gebildet.

Die Trägerfilamente FF sind in der unteren Gewebelage U des Breitenbereichs I vorzugweise mit einer Gewebedichte DG, berechnet nach Prof. Walz, von höher als 60% eingebunden.

Im Breitenbereich II mit vorzugsweise einem Gesamtflächenanteil (in der Lauffläche) von weniger als 30% binden die Trägerfilamente FF einflächig in der unteren Gewebelage U mit einer Gewebedichte DG, berechnet nach Prof. Walz, von höher als 90% ein.

Der Breitenbereich III bzw. die Karkasse besteht aus einer oberen und einer unteren Gewebelage O und U. Die Trägerfilamente FF werden in die untere Gewebelage U mit einer Gewebedichte DG, berechnet nach Prof. Walz, von höher als 70% eingebunden.

Die Standzeit einer mit dem erfindungsgemäßen textilen Flächengebilde ausgestatteten Schneekette wird vorteilhafterweise erhöht, indem ein Herauslösen von Trägerfilamenten FF durch die zusätzliche Verankerung in den erfindungsgemäß gestalteten zweiten Breitenbereichen II verhindert wird. Dies lässt sich bindungstechnisch vorteilhafterweise erreichen durch einerseits ein Abbinden der Trägerfilamente FF an der Unterseite der zweiten Breitenbereiche II und indem andererseits die Gewebedichte in den zweiten Breitenbereichen II im Wege einer einlagigen Bindungsstruktur wesentlich höher ausgelegt wird, als dies in der unteren Gewebelage U der Breitenbereiche I und III der Fall ist. Dabei sind die Trägerfilamente FF erfindungsgemäß derart in das textile Flächengebilde eingebunden, dass sie in den zur Kettfadenrichtung im Wesentlichen parallelen ersten Breitenbereichen I an die Oberfläche der oberen Gewebelage O treten und in den zur Kettfadenrichtung im Wesentlichen parallelen zweiten Breitenbereichen II nicht an die Oberfläche der oberen Gewebelage O treten.

## Patentansprüche

1. Gewebtes textiles Flächengebilde, mit einer oberen Gewebelage (O) und einer unteren Gewebelage (U), welches Kettfäden (K) und erste und zweite Schussfäden aufweist, und als zweite Schussfäden Trägerfilamente (FF) und diese umgebende Umwindefilamente (UF) aufweist, **dadurch gekennzeichnet, dass** die Trägerfilamente (FF) derart in das textile Flächengebilde eingebunden sind, dass sie in zur Kettfadenrichtung im Wesentlichen parallelen ersten Breitenbereichen (I) an die Oberfläche der oberen Gewebelage (O) treten und in zur Kettfadenrichtung im Wesentlichen parallelen zweiten Breitenbereichen (II) nicht an die Oberfläche der oberen Gewebelage (O) treten.

2. Textiles Flächengebilde nach Anspruch 1, **dadurch gekennzeichnet, dass** es eine rechte und einen linke Karkasse (BR, BL) und eine dazwischen liegende Lauffläche (LF) aufweist, wobei die Karkassen (BR, BL) dritte Breitenbereiche (III), in denen die die Trägerfilamente (FF) derart in das textile Flächengebilde eingebunden sind, dass sie nicht an die Oberfläche der oberen Gewebelage (O) treten, und wobei die Lauffläche (LF) erste und zweite Breitenbereiche (I, II) aufweist.

3. Textiles Flächengebilde nach Anspruch 1 oder 2, **dadurch gekennzeichnet, dass** die Lauffläche (LF) in Schussfadenrichtung gleichmäßig verteilte erste Breitenbereiche (I), sogenannte Bordüren (I) aufweist.

4. Textiles Flächengebilde nach Anspruch 1, 2 oder 3, **dadurch gekennzeichnet, dass** die Lauffläche (LF) in Schussfadenrichtung in besonders ausgewählter Verteilung quer über die Breite der Lauffläche erste Breitenbereiche (I) auch unterschiedlicher Breite aufweist.

5. Textiles Flächengebilde nach Anspruch 1, 2, 3 oder 4, **dadurch gekennzeichnet, dass** es in vorbestimmter Länge (L) abgepasst gewebt ist, und dass die Lauffläche (LF) zur Schussfadenrichtung im Wesentlichen parallele Längenbereiche (LB) aufweist, in denen keine zweiten Schussfäden (FF) eingebunden sind.

6. Textiles Flächengebilde nach Anspruch 1, 2, 3, 4 oder 5, **dadurch gekennzeichnet, dass** die zweiten Schussfäden (FF) Umwindefilamente (UF) in S-oder Z-Wicklung aufweisen.

7. Textiles Flächengebilde nach Anspruch 1, 2, 3, 4, 5 oder 6, **dadurch gekennzeichnet, dass** sich immer ein zweiter Schussfaden (FF) mit Umwindefilament (UF) in S-Wicklung mit einem zweiten Schussfaden (FF) mit Umwindefilament (UF) in Z-Wicklung abwechselt.

8. Textile Schneekette mit einem textilen Flächengebilde nach einem der Ansprüche 1 bis 7.

9. Verfahren zur Herstellung eines textilen Flächengebildes, mit einer oberen Gewebelage (O) und einer unteren Gewebelage (U), welches Kettfäden und erste und zweite Schussfäden aufweist, und als zweite Schussfäden Trägerfilamente (FF) und diese umgebende Umwindefilamente aufweist, **dadurch gekennzeichnet, dass** die Trägerfilamente (FF) derart in das textile Flächengebilde eingebunden werden, dass sie in zur Kettfadenrichtung im Wesentlichen parallelen ersten Breitenbereichen (I) an die Oberfläche der oberen Gewebelage (O) treten und in zur Kettfadenrichtung im Wesentlichen parallelen zweiten Breitenbereichen (II) nicht an die Oberfläche der oberen Gewebelage (O) treten.

10. Verfahren zur Herstellung eines textilen Flächengebildes nach einem der Ansprüche 2 bis 7, **dadurch gekennzeichnet, dass** es in mehrfach nebeneinander liegender Anordnung in einer Gewebebahn gewebt wird.

11. Verfahren nach Anspruch 10, **dadurch gekennzeichnet, dass** die in mehrfach nebeneinander liegender Anordnung in einer Gewebebahn gewebten textilen Flächengebilde in Kettfadenrichtung mittels thermisch-mechanischer Trennverfahren oder mittels Ultraschall oder Laserschweißen getrennt werden.

12. Verfahren nach Anspruch 10 oder 11, **dadurch gekennzeichnet, dass** das textile Flächengebilde in Schussrichtung mehrbahnig und in Kettrichtung in vorbestimmtem Längsrapport unter Einbezug der Längenbereiche, in denen keine zweiten Schussfäden (FF) eingebunden werden, abgepasst gewebt wird.

13. Verfahren nach Anspruch 12, **dadurch gekennzeichnet, dass** das abgepasst gewebte textile Flächengebilde in Schussrichtung mittels einer mechanischen, thermischen oder lasertechnischen Trennvorrichtung zu einzelnen Panels abgelängt wird.

## Claims

1. A woven textile web material having an upper fabric layer (O) and a lower fabric layer (U), comprising warp threads (K) and first and second weft threads, and comprising carrier filaments (FF) and entwining filaments (UF) encompassing said carrier filaments (FF) as second weft threads, **characterized in that** said carrier filaments (FF) are integrated in the textile web material such that they appear at the surface of the upper fabric layer (O) in first width portions (I) substantially parallel to the warp thread direction, and do not appear at the surface of the upper fabric layer (O) in second width portions (II) substantially parallel to the warp thread direction.

2. The textile web material as set forth in claim 1, **characterized in that** it comprises a right-hand and left-hand casing (BR, BL) with a tread (LF) in-between, said casings (BR, BL) featuring third width portions (III) in which the carrier filaments (FF) are integrated in the textile web material such that they do not appear at the surface of the upper fabric layer (O) and the tread (LF) comprises first and second width portions (I, II).

3. The textile web material as set forth in claim 1 or 2, **characterized in that** said tread (LF) comprises first width portions (I) evenly distributed in the weft thread direction as so-called borders (I).

4. The textile web material as set forth in claim 1, 2 or 3, **characterized in that** said tread (LF) comprises in the weft thread direction a specially selected distribution of first width portions (I) also differing in width sited transversely over the width of the tread.

5. The textile web material as set forth in claim 1, 2, 3 or 4, **characterized in that** it is woven in a predefined length (L) and that the tread (LF) features length portions (LB) oriented substantially parallel to the weft thread direction in which no second weft threads (FF) are incorporated.

6. The textile web material as set forth in claim 1, 2, 3, 4 or 5, **characterized in that** said second weft threads (FF) comprise entwining filaments (UF) in an S or Z-type entwinement.

7. The textile web material as set forth in claim 1, 2, 3, 4, 5 or 6, **characterized in that** a second weft thread (FF) with an S-type entwinement filament (UF) regularly alternates with a second weft thread (FF) with Z-type entwinement filament (UF).

8. A textile snow chain featuring a textile web material as set forth in any of the claims 1 to 7.

9. A method of producing a woven textile web material having an upper fabric layer (O) and a lower fabric layer (U), comprising warp threads and first and second weft threads, and comprising carrier filaments (FF) and entwining filaments (UF) encompassing said carrier filaments (FF) as second weft threads (FF), **characterized in that** said carrier filaments (FF) are integrated in the textile web material such that they appear at the surface of the upper fabric layer (O) in first width portions (I) substantially parallel to the warp thread direction, and do not appear at the surface of the upper fabric layer (O) in second width portions (II) substantially parallel to the warp thread direction.

10. A method of producing a woven textile web material as set forth in any of the claims 2 to 7, **characterized in that** said textile web material is woven in a multiple, juxtaposed arrangement in a web.

11. The method as set forth in claim 10, **characterized in that** said textile web materials woven multiply juxtaposed in a web in the warp thread direction are parted from each other by means of a thermomechanical cutting-off, ultrasound or laser welding process.

12. The method as set forth in claim 10 or 11, **characterized in that** said textile web material is correspondingly woven in the weft thread direction multiwebbed and in the warp thread direction in the predefined length sequence including the length portions in which no second weft threads (FF) are included.

13. The method as set forth in claim 12, **characterized in that** said textile web material woven in predefined length sequence is panelled in the weft thread direction by means of a mechanical, thermal or laser parting device.

## Revendications

1. Structure plane textile tissée avec une couche tissée supérieure (O) et une couche tissée inférieure (U) présentant des fils de chaîne (K) et des premiers et deuxièmes fils de trame et présentant comme deuxièmes fils de trame des filaments de support (FF) entourés par des filaments de guipage (UF), la structure plane textile est **caractérisée en ce que** les filaments de support (FF) sont intégrés dans la structure plane textile de telle sorte qu'ils aboutissent à la surface de la couche tissée supérieure (O) dans des premières parties de largeur (I) sensiblement parallèles au sens chaîne et n'aboutissent pas à la surface de la couche tissée supérieure (O) dans les deuxièmes parties de largeur (II) sensiblement parallèles au sens chaîne.

2. Structure plane textile selon la revendication 1, **caractérisée en ce qu'**elle présente une carcasse droite et gauche (BR, BL), ainsi qu'une bande intermédiaire de roulement (LF), les carcasses (BR, BL) présentant des troisièmes parties de largeur (III) dans lesquelles les filaments de support (FF) sont intégrés dans la structure plane, textile de telle sorte qu'ils n'aboutissent pas à la surface de la couche tissée supérieure (O) et que la bande de roulement (LF) présente des premières et des deuxièmes parties de largeur (I, II).

3. Structure plane textile selon la revendication 1 ou 2, **caractérisée en ce que** la bande de roulement (LF) présente des premières parties de largeur (I), nommées bordures (I), régulièrement réparties dans le sens des fils de trame.

4. Structure plane textile selon la revendication 1, 2 ou 3, **caractérisée en ce que** la bande de roulement (LF), dans une répartition particulière, présente dans le sens des fils de trame en travers de la largeur de la bande de roulement des premières parties de largeur (I) pouvant être de largeurs différentes.

5. Structure plane textile selon la revendication 1, 2, 3 ou 4, **caractérisée en ce que** le tissage a été adapté à une longueur prédéterminée (L) et que la surface de roulement (LF) dans le sens des fils de trame présente des parties de longueur (LB) sensiblement parallèles dans lesquelles des deuxièmes fils de trame (FF) n'ont pas été intégrés.

6. Structure plane textile selon la revendication 1, 2, 3, 4 ou 5, **caractérisée en ce que** les deuxièmes fils de trame (FF) présentent des filaments de guipage (UF) à enroulement S ou Z.

7. Structure plane textile selon la revendication 1, 2, 3, 4, 5 ou 6, **caractérisée en ce qu'**un deuxième fil de trame (FF) avec un filament de guipage (UF) à enroulement S alterne toujours avec un deuxième fil de trame (FF) avec un filament de guipage (UF) à enroulement Z.

8. Chaîne à neige textile avec une structure plane textile selon l'une des revendications 1 à 7.

9. Procédé pour la fabrication d'une structure plane textile avec une couche tissée supérieure (O) et une couche tissée inférieure (U) présentant des fils de chaîne et des premiers et deuxièmes fils de trame et présentant comme deuxièmes fils de trame des filaments de support (FF) entourés par des filaments de guipage (UF) ; la structure plante textile est **caractérisée en ce que** les filaments de support (FF) sont tissés dans la structure plane textile de telle sorte qu'ils aboutissent à la surface de la couche tissée supérieure (O) dans des premières parties de largeur (I) sensiblement parallèles au sens chaîne et n'aboutissent pas à la surface de la couche tissée supérieure (O) dans des deuxièmes parties de largeur (II) sensiblement parallèles au sens chaîne.

10. Procédé pour la fabrication d'une structure plane textile selon l'une des revendications 2 à 7, **caractérisé en ce que** le tissage est effectué selon un agencement plusieurs fois juxtaposé d'une bande de tissu.

11. Procédé selon la revendication 10, **caractérisé en ce que** l'agencement plusieurs fois juxtaposé dans une bande de tissu d'une structure plane textile tissée dans le sens chaîne est interrompu au moyen d'un procédé de séparation thermo-mécanique ou bien au moyen d'ultrasons ou par soudage au laser.

12. Procédé selon la revendication 10 ou 11, **caractérisé en ce que** la structure plane textile est tissée et ajustée dans le sens trame sur plusieurs bandes et dans le sens chaîne dans un rapport de longueur prédéterminé en tenant compte des parties de longueurs dans lesquelles des deuxièmes fils de trame (FF) ne sont pas intégrés.

13. Procédé selon la revendication 12, **caractérisé en ce que** la structure plane textile tissée et ajustée est découpée dans le sens trame en panneaux individuels au moyen d'un dispositif de séparation mécanique, thermique ou par technique laser.
